# EUROPÄISCHE PATENTANMELDUNG

(11) **EP 0 962 795 A2**
(43) Veröffentlichungstag der Anmeldung: **08.12.1999**
(21) Anmeldenummer: 99440114.9
(22) Anmeldetag: 14.05.1999
(51) Int. Cl.: G02B 6/34

(54) **Optische Verbindung sowie Verbindungseinheit zum Austausch von Daten zwischen Geräten**

(30) Priorität: 27.05.1998 DE 19823587
(71) Anmelder: ALCATEL, 75008 Paris (FR)
(72) Erfinder: Weis, Dr., Bernd X., 70825 Korntal-Münchingen (DE)
(74) Vertreter: Rausch, Gabriele, Dr.

(57) **Zusammenfassung**

Es wird eine optische Verbindung sowie eine Verbindungseinheit zum Austausch von Daten zwischen Geräten zwischen einzelnen Installationseinheiten (2) vorgeschlagen, wobei die Geräte (1) über optische Signale miteinander kommunizieren und die optischen Signale mindestens den Abstand zwischen zwei benachbarten Installationseinheiten überwinden.

## Beschreibung

Die Erfindung geht aus von einer optischen Verbindung zum Austausch von Daten zwischen Geräten sowie einer Verbindungseinheit zum Austausch von optischen Signalen nach der Gattung der unabhängigen Ansprüche. Für die unterschiedlichsten Anwendungen werden eine Vielzahl einzelner Geräte und Komponenten benötigt, die in Installationseinheiten wie z.B. Racks eingebaut sind. Diese Vielzahl von Komponenten und Geräten müssen im allgemeinen miteinander kommunizieren und Informationen und Signale austauschen. Als Beispiel dient eine digitale Vermittlungsstation, in der beispielsweise eine Anzahl von bis zu 40 einzelnen Installationseinheiten stehen und miteinander verbunden werden müssen. Für die Installation der unterschiedlichen Einheiten ist es von Bedeutung, welche Geräte miteinander kommunizieren müssen, abhängig von ihren jeweiligen Aufgaben. Daher ist die Anordnung der einzelnen Installationseinheiten in einem Raum ein logistisches Problem. Die Datenverbindungen werden dabei von den einzelnen Installationseinheiten, den einzelnen Racks, über Glasfaser-oder Drahtverbindungen hergestellt. Damit sind Positionierungen relativ zueinander festgelegt, so daß ein einfaches Umstecken sowie eine Veränderung der einzelnen Verbindungen nicht ohne Weiteres möglich ist.

Aus dem Stand der Technik, zum Beispiel der US 5 091 985 ist bekannt, einzelne Geräte eines Racks über eine Wellenleiterstruktur optisch miteinander zu verbinden. Dabei geht man davon aus, daß hohe Datenraten sehr flexibel über optische Kommunikation mitgeteilt werden können. Die einzelnen Komponenten eines Racks besitzen dabei eine Sender-Empfänger-Struktur, die mit einer abbildenden Optik die Informationen auf einen Wellenleiter abbildet, sodaß alle an diesen Wellenleiter angeschlossenen Geräte die Informationen vom Wellenleiter empfangen können. Diese Struktur dient zur Kommunikation innerhalb eines Racks.

Die erfindungsgemäße optische Verbindung zum Austausch von Daten zwischen Geräten, die in einem geschlossenen Raum in einzelnen Installationseinheiten eingebaut sind, hat dem gegenüber den Vorteil, daß die Geräte in den installationseinheiten über optische Signale miteinander kommunizieren, wobei die optischen Signale den Abstand zwischen Installationseinheiten überwinden. Dadurch erhält man eine drahtlose Verbindung zwischen einzelnen Racks, die in einer Insellösung im Raum aufgestellt werden können und freien Zugang zu optischen Verbindungen miteinander bieten. Für eine solche optische Verbindung wird vorteilhafterweise Licht zwischen Installationseinheiten übertragen, wobei lediglich sichergestellt werden muß, daß keine Unterbrechung des Lichtweges und damit des Informationsflusses erfolgt.

Die erfindungsgemäße Verbindungseinheit zum Austausch von optischen Signalen hat den Vorteil, daß sie aus mindestens einem Sender und mindestens einem Empfänger besteht, die mit einem Demultiplexer bzw. einem Multiplexer verbunden sind. Dadurch wird vorteilhafterweise eine Vielzahl von Kanälen für die Übertragung von Daten geöffnet, sodaß Anforderungen an hohe Datenraten sowie an unterschiedliche Datenkanäle erfüllt werden.

Vorteilhafterweise wird die Qualität der Übertragung über einen speziellen Kalibriersender sowie einen Kalibrierempfänger überprüft. Dadurch kann das System automatisch überwacht und eine komplikationsfreie Datenübertragung sichergestellt werden. Vorteilhafterweise wird die Synchronisation der Signale über eine getrennte Systemuhr, deren Signale mit der Kalibrierung übertragen und empfangen werden aufeinander abgestimmt. Die Einstellung der Verbindungseinheiten zueinander erfolgt bei der Installation der Einheiten indem Sender- und Empfängereinheiten mechanisch aufeinander abgestimmt werden. Dazu sind die Verbindungseinheiten in den Installationseinheiten kardanisch aufgehängt und können auf einfache Art und Weise gegeneinander verschoben und eingestellt werden. Die automatische Überwachung für dieses Kalibriersignal ermöglicht einen Hinweis, um eine eventuelle Nacheinstellung vorzunehmen.

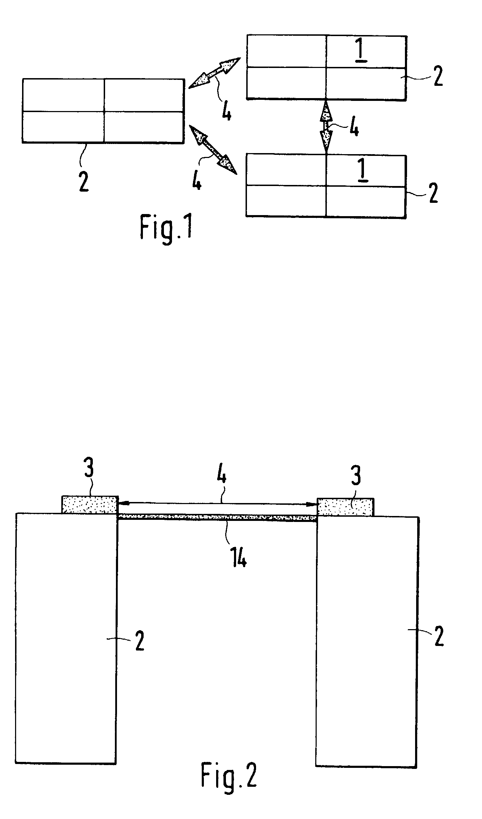

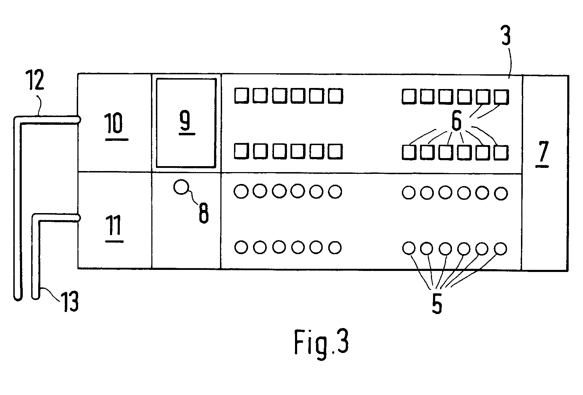

Ein Ausführungsbeispiel der Erfindung ist in der Zeichnung dargestellt und in der nachfolgenden Beschreibung näher erläutert. Es zeigt Figur 1 schematisch die Installationseinheiten, Figur 2 eine optische Verbindung zwischen zwei Installationseinheiten und Figur 3 eine Verbindungseinheit. Figur 1 zeigt von oben gesehen die Installationseinheiten 2, in denen einzelne Geräte 1 eingebaut sind. Die Installationseinheiten können in Form von Racks ausgebildet sein. Die Installationseinheiten finden sich an beliebigen Stellen in einem Raum, wobei ihre Position von ihren Aufgaben und den möglichen Verbindungen bestimmt werden. Die Installationseinheiten 2 kommunizieren über eine optische Verbindung 4 miteinander. Figur 2 zeigt die optische Verbindung 4 zwischen zwei installationseinheiten 2. Auf den Installationseinheiten 2 sitzen Verbindungseinheiten 3, über die die optische Verbindung 4 hergestellt wird. Die optische Verbindung 4 kann wie in diesem Ausführungsbeispiel gezeigt mit einem mechanischen Schutz 14 versehen sein. Der mechanische Schutz 14 dient dazu, daß die optische Strecke nicht durch irgendwelche Gegenstände bzw. Personen unterbrochen und die Datenkommunikation damit abgebrochen wird. Figur 3 zeigt eine Verbindungseinheit 3 , wie sie zum Herstellen der Kommunikation zwischen den Installationseinheiten verwendet wird. Die Verbindungseinheit 3 weist mehrere Sender 5 auf, die über den Eingang 13 und einen Multiplexer 1 1 mit den Geräten der Installationseinheit verbunden sind. Empfangsseitig weist die Verbindungseinheit 3 einen Empfänger 6 auf, der über einen Demultiplexer 10 die Informationen über die Ausgangsleitung 12 an die Geräte der Installationseinheit liefern. Weiterhin besitzt die Verbindungseinheit 3 einen Kalibriersender 8 sowie einen Kalibrierempfänger 9 . Eine Kontrolleinheit 7, die sowohl mit dem Multiplexer 11 als auch mit dem Demultiplexer 10 in Verbindung steht, kontrolliert die Verbindungseinheit. Zur Herstellung der Verbindung zwischen den Installationseinheiten werden die Daten der Geräte im Multiplexer aufbereitet und auf die Senderbank gegeben. Die Anordnung der Sender sowie deren Zahl entspricht den Anfordernissen der Datenübertragung. Zum Einsatz kommen dabei beispielsweise Infrarotdioden, empfängerseitig sind Infrarotsensoren vorhanden. Als Kalibriersender kann ebenfalls eine infrarotdiode dienen. Der Kalibrierempfänger weist eine größere Fläche auf, sodaß eine Auswertung der Position des von der anderen Verbindungseinheit ausgesandten Kalibriersignals erfolgen kann. Auf diese Weise ist sicherzustellen, daß die kleinflächigeren Empfänger der Verbindungseinheit ausreichend von dem Lichtsignal getroffen werden. Je nach welchem Protokoll die Daten von den Installationseinheiten ausgesendet und empfangen werden ist die Herstellung einer gemeinsamen Zeitbasis für die unterschiedlichen Installationseinheiten notwendig. Diese Zeitbasis kann durch Modulation des Kalibriersignals auf einfache Art und Weise hergestellt werden. Das erfindungsgemäße System der optischen Verbindung bietet die Möglichkeit sehr flexibel neue Installationseinheiten sowie neue Geräte zu installieren und über den optischen Weg miteinander zu verbinden. Dadurch erreicht man eine hohe Flexibilität in der Gestaltung zum Beispiel einer Vermittlungsstelle. Aber auch für andere Anwendungen ist die optische Kommunikation ein einfacher Weg, auf umständliche Verkabelungen zu verzichten. Die Ansteuerung der Verbindungseinheiten ist auf einfache Art möglich, sie verlangt im allgemeinen keinen höheren Aufwand als es die Kommunikation der Geräte untereinander bereits nötig macht. Lediglich in dem Fall, daß größere Datenmengen übertragen werden sollen ist die Integration eines Multiplexers bzw. Demultiplexers notwendig um die einzelnen Sender der Senderbank sowie die einzelnen Empfänger der Empfängerbank mit Daten zu versorgen bzw. deren Daten auszuwerten.

## Patentansprüche

1. Optische Verbindung (4) zum Austausch von Daten zwischen Geräten (1), die in einem geschlossenen Raum in einzelnen Installationseinheiten (2) eingebaut sind, und die Geräte (1) über optische Signale von Verbindungseinheiten (3) miteinander kommunizieren, dadurch gekennzeichnet, daß daß die sie mindestens einen Sender (5) und mindestens einen Empfänger (6) aufweisen, die mit einem Demultiplexer(10) bzw. Multiplexer (11) verbunden sind.

2. Verbindungseinheit (3) zum Austausch von optischen Signalen nach Anspruch 1, dadurch gekennzeichnet, daß die Verbindungseinheit (3) einen Kablibriersender (8) und -empfänger (9) aufweist.

3. Verbindungseinheit (3) zum Austausch von optischen Signalen nach Anspruch 2 oder 4, dadurch gekennzeichnet, daß die Verbindungseinheit (3) von der Systemsteuerung der Geräte (1) in einer Installationseinheit (2) gesteuert wird.

4. Verbindungseinheit (3) zum Austausch von optischen Signalen nach Anspruch 3, dadurch gekennzeichnet, daß die Verbindungseinheit (3) eine eigene Kontrolleinheit (7) aufweist.

5. Verbindungseinheit (3) zum Austausch von optischen Signalen nach Anspruch 4, dadurch gekennzeichnet, daß die Kalibrierung der Signalstärke der optischen Signale automatisch nach Auswertung des Kalibriersignals erfolgt.

6. Verbindungseinheit (3) zum Austausch von optischen Signalen nach Anspruch 5, dadurch gekennzeichnet, daß ein Zeitsignal mit dem Kalibriersignal übertragen wird.

7. Verbindungseinheit zum Austausch von optischen Signalen nach Anspruch 1, dadurch gekennzeichnet, daß sie in der Installationseinheit (2) kardanisch befestigt ist und mechanisch nach dem Kalibriersignal ausgerichtet wird.
